# EUROPEAN PATENT APPLICATION

(11) **EP 2 594 356 A2**
(43) Date of publication of application: **22.05.2013**
(21) Application number: 11775199.0
(22) Date of filing: 19.04.2011
(51) Int. Cl.: B23K 9/167, B23K 9/127, B23K 9/12

(54) **TIG WELDING MACHINE**

(30) Priority: 30.04.2010 KR 20100040717
(71) Applicant: Oh, Sung Gu, Gimpo-si, Gyeonggi-do 415-852 (KR); Ra, Sung Ho, Nam-gu, Incheon 402-023 (KR)
(72) Inventor: Oh, Sung Gu, Gimpo-si, Gyeonggi-do 415-852 (KR); Ra, Sung Ho, Nam-gu, Incheon 402-023 (KR)
(74) Representative: Pulieri, Gianluca Antonio
(86) International application number: PCT/KR2011/002775
(87) International publication number: WO 2011/136494

(57) **Abstract**

The present invention relates to a TIG welding machine. The TIG welding machine according to the present invention includes: a torch unit (400) disposed with an electrode (632), a wire (634) and a weaving unit (410); a welding posture control unit (100) for controlling a welding posture by rotating the torch unit (400) vertically and horizontally so as to precede the torch unit (400) with reference to the advancing direction of the torch unit (400); a weld line tracing unit (200) mounted to the welding posture control unit (100) and detecting the placed state of a base metal for welding so as to trace a weld line; and a torch transfer unit (300) for moving the torch unit (400) based on the information of the weld line which has been traced in the weld line tracing unit (200).

## Description

### FIELD OF THE INVENTION

The present invention relates to a TIG welding machine, more particularly, a TIG welding machine which can trace a weld line in real time and then move a torch based on information regarding the traced weld line to perform the TIG welding.

### DESCRIPTION OF RELATED ART

In general, the TIG welding stands for "Tungsten Inert Gas arc welding".

The TIG welding is performed by generating arc by using tungsten rod as an electrode and melting a filler metal by the arc, wherein the tungsten rod of the electrode is used and a wire made of copper(Cu) is used for the filler metal.

The tungsten rod is hardly consumed while the only wire made of copper is consumed.

Furthermore, in the TIG welding, Ar or He gas is supplied to a region where the arc is generated through a welding holder, and the welding is performed while the filler metal and base metal are molten in such an inert gas atmosphere.

At this time, thermal deformation occurs in the base metal due to a high temperature shown during the welding, and such a thermal deformation may vary the weld line, and in the case where a spacing between the electrode and base metal is not constant due the variation of the weld line, defect may be caused in a welded zone or inferiority of welding may be caused due to overcurrent and undercurrent.

Furthermore, the spacing between the electrode and base metal and angle defined between the torch and base metal etc. are very sensitive to a welding posture, and when the weld line is varied because the welding posture is changed or turned, it is necessary to actively cope with the varied weld line.

In particular, since the intensity of welding current is varied due to variation of 1 mm ∼ 2 mm of the spacing between the base metal and electrode rod, the best quality of welding can be expected when the spacing or angle of the welding torch is ideal, but as described above, if the arc is abnormally generated due to a bad welding posture, the TIG welding is not normally performed, therefore, skill of a high level is required.

On the other hand, as a technique for automatically tracing the weld line in a carbon arc welding apparatus, a technique has been suggested for tracing the weld line by using a laser scanner.

However, there are problems that spatter is generated in the carbon arc welding apparatus, and such spatter splashes to contaminate an optical lens of the laser scanner etc., and the spatter interferes with a laser tracing line in the air, thus the state of the base metal for welding may not be accurately measured, and due to inaccurate measurement, information regarding the weld line is wrong which will be a basis of welding path, thus the welding may not be normally performed.

Yet furthermore, a disposed orientation and posture of the base metal may be different according to an environment for welding operation, and at this time, the posture or orientation of the welding rod may have an influence on the quality of welding, therefore, it is necessary to actively and quickly change the welding posture so as to adapt to the environment for welding operation,

### SUMMARY OF THE PRESENT INVENTION

A technical task to be done by the present invention has an object of providing a TIG welding machine which can move the torch along an optimal welding path by tracing the weld line even though the state of base metal to be welded is somewhat distorted or the height of the base metal is not even.

Another object of the present invention is to provide a TIG welding machine which can actively change the welding posture according to the disposed orientation of the base metal for welding, thereby enhancing an efficiency of automated welding machine.

The technical tasks to be done by the present invention are not limited by the above-mentioned technical task, and another technical tasks not mentioned can be apparently understood from the following description by persons having an ordinary skill in the art to which the present invention belongs.

The TIG welding machine for achieving the above-mentioned technical tasks comprises a torch unit in which an electrode, a wire and a weaving unit are disposed; a welding posture control unit for controlling a welding posture by rotating the torch unit in vertical and horizontal directions; a weld line tracing unit installed at the welding posture control unit in the front of the torch unit with respect to advancing direction of the torch unit for tracing a weld line by detecting a placed state of a base metal for welding; and a torch transfer unit for moving the torch unit based on information regarding the weld line which has been traced by the weld line tracing unit.

Furthermore, the welding posture control unit comprises a first rotating actuator installed at a frame for rotating a first rotatable bracket; a second rotating actuator installed at the first rotatable bracket for rotating a second rotatable bracket; and a third rotating actuator installed at the second rotatable bracket for rotating a third rotatable bracket at which the torch unit is installed.

Furthermore, the weld line tracing unit comprises a visual sensor unit for scanning the weld line of the base metal for welding; and a feed control unit for tracing the weld line by calculating scanned information received from the visual sensor unit.

Furthermore, the torch transfer unit comprises a first feed actuator installed on one side of the welding posture control unit for moving the torch unit a first direction based on the weld line which has been traced by the weld line tracing unit; and a second feed actuator installed on one side of the first feed actuator for moving the torch unit in a second direction perpendicular to the first direction based on the weld line which has been traced by the weld line tracing unit.

Details of other examples are included in a section of detailed description and the drawings.

### ADVANTAGEOUS EFFECTS

The TIG welding machine as constructed above can more accurately trace the weld line since the spatter as shown in the carbon arc welding is not generated and precisely maintain the welding posture by moving the torch based on the information regarding the traced weld line, thus can enhance the quality of welding.

Furthermore, the TIG welding machine according to the present invention can efficiently adapt to a welding operation site by actively changing the orientation of the torch according to placed state or posture of the base metal for welding and realize an automated welding machine with a high degree of completeness.

### BRIEF DESCRIPTION OF THE DRAWINGS

Fig. 1 is a view for explaining a TIG welding machine according to an example of the present invention.

Figs. 2 and 3 are front view and plane view, respectively, for explaining a welding posture control unit (100) in the TIG welding machine according to an example of the present invention.

Figs. 4 and 5 are views for explaining a torch transfer unit (300) in the TIG welding machine according to an example of the present invention.

### * list of reference numerals *

| | | | |
|---|---|---|---|
| 100 : | welding posture control unit | 102 : | frame |
| 110, 120, 130 : | rotating actuators | | |
| 112, 122, 132 : | first, second and third rotatable bracket | | |
| 200 : | weld line tracing unit | 202 : | fixing bracket |
| 210 : | visual sensor unit | 220 : | feed control unit |
| 300 : | torch transfer unit | 302 : | first block |
| 310, 320 : | first and second feed actuators | | |
| 312, 322 : | first and second screws | | |
| 314, 324 : | first and second nut blocks | 316 : | second |
| | block | | |
| 400 : | torch unit | 402 : | holder arm |
| 410 : | weaving unit | 412 : | torch |
| 416 : | wire holder | | |
| 512, 514 : | first and second base metals | 516 : | weld line |
| 600 : | main control unit | 610 : | wire feeding unit |
| 620 : | holder cable | 632 : | electrode |
| 634 : | wire | | |

### MODE FOR CARRYING OUT THE INVENTION

Advantages, features and method for achieving thereof will be apparent by referring to examples described in detail in conjunction with the attached drawings.

Identical reference numerals designate identical components throughout the specification.

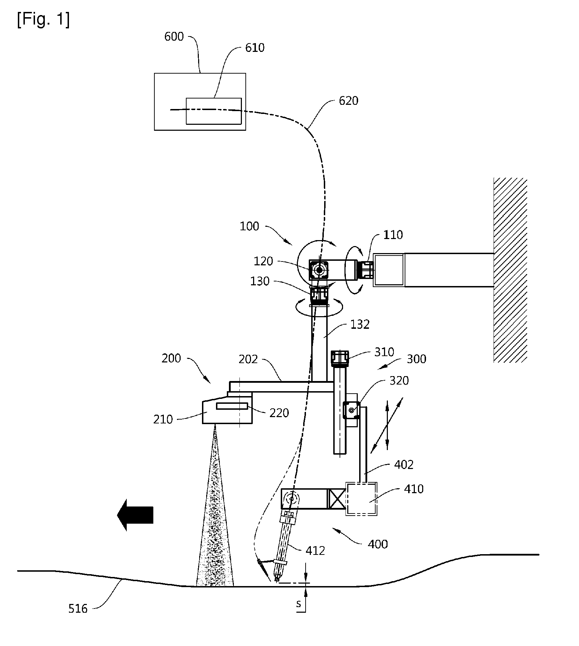

Hereinafter, a TIG welding machine according to an example of the present invention will be described with reference to Fig. 1.

Fig. 1 in the attached drawings is one for explaining the TIG welding machine according to an example of the present invention.

As shown in Fig. 1, the TIG welding machine according to an example of the present invention comprises a welding posture control unit (100) for controlling a welding posture by rotating a torch unit (400) in vertical and horizontal directions; a weld line tracing unit (200) for tracing the weld line by detecting a placed state of a base metal for welding; and a torch transfer unit (300) for moving the torch unit (400) based on information regarding the weld line.

In the torch unit (400), an electrode (632) and a wire (634) and a weaving unit (410) are disposed.

The electrode (632) may be a tungsten electrode rod and the wire (634) may be a welding wire made of copper (Cu).

The weaving unit (410) is a device for reciprocating leftward and rightward the torch (412) of the torch unit (400) within a range of fixed width and forms a weld bead as the welding proceeds.

The electrode (632) is disposed at a lower end of the torch (412) and a wire holder (416) is disposed on one side of the torch (412), and the wire (634) is supported in an idle state by the wire holder (416) and fed by a wire feeding unit (610) to a region where the wire (634) is welded.

Furthermore, the torch unit (400) is connected to a main control unit (600) by a holder cable (620), and the feeding unit (610) for feeding the wire (634) may be disposed on one side of the main control unit (600).

Furthermore, arranged on the holder cable (620) may be a hose for supplying inert gas to the torch unit (400) and a power line for generating arc.

Furthermore, the feeding unit (610) feeds the wire (634) and particularly, feeds the wire (634) while maintaining appropriate velocity suitable for a proceeding velocity of welding.

The weld line tracing unit (200) is positioned in front of the torch unit (400) with respect to proceeding direction of welding.

Furthermore, the weld line tracing unit (200) comprises a visual sensor unit (210) for scanning the weld line of base metal for welding and a feed control unit (220) for tracing the weld line by calculating scanned information received from the visual sensor unit (210).

Thus, when the welding proceeds, the weld line tracing unit (200) can scan surfaces of first and second base metal (512, 514) while preceding the torch unit (400), thereby tracing the weld line (516) between the first and second base metal (512, 514).

Furthermore, since the visual sensor unit (210) can measure a distance from an object to be measured, the visual sensor unit can detect vertical variation or lateral meandering of the weld line (516), and such information is calculated in the feed control unit (220) and information regarding the traced weld line can be output as value of vertical displacement and lateral displacement.

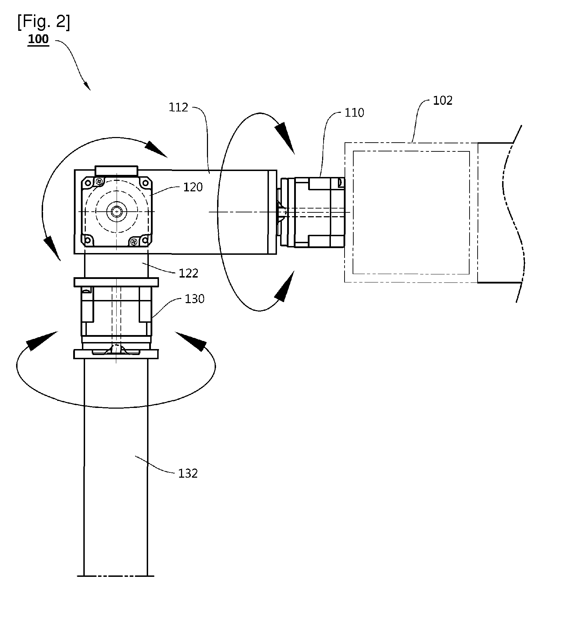

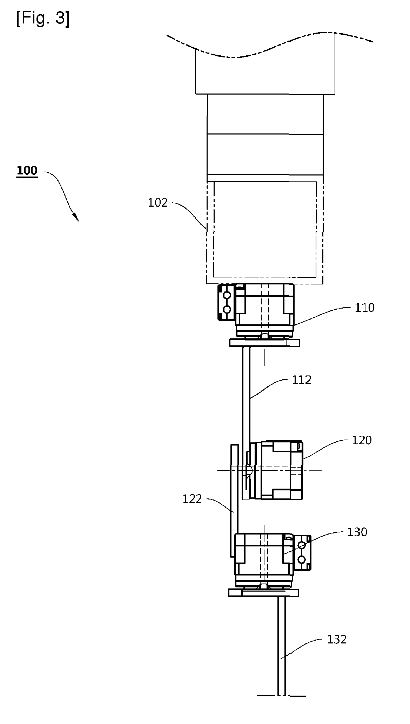

The welding posture control unit (100) will be described in a little greater detail with reference to Figs. 2 and 3 of the attached drawings.

Figs. 2 and 3 of the attached drawings are front view and plane view, respectively, for explaining the welding posture control unit (100) in the TIG welding machine according to an example of the present invention.

As shown in Figs. 2 and 3, the welding posture control unit (100) comprises first, second and third rotating actuators (110, 120, 130).

In a little more particular, the first rotating actuator (110) is installed at a frame (102), and a first rotatable bracket (112) is installed at the first rotating actuator (110), and thus the first rotatable bracket (112) is rotated by being driven by the first rotating actuator (110).

Furthermore, the second rotating actuator (120) is installed at the first rotatable bracket (112) and a second rotatable bracket (122) is installed at the second rotating actuator (120), and thus the second rotatable bracket (122) is rotated by being driven by the second rotating actuator (120).

Furthermore, an operational shaft of the first rotating actuator (110) and an operational shaft of the second rotating actuator (120) may be disposed perpendicular to each other.

Furthermore, the third rotating actuator (130) is installed at the second rotatable bracket (122) and a third rotatable bracket (132) is installed at the third rotating actuator (130), and thus the third rotatable bracket (132) is rotated by being driven by the third rotating actuator (130).

Furthermore, an operational shaft of the second rotating actuator (120) and an operational shaft of the third rotating actuator (130) may be disposed perpendicular to each other.

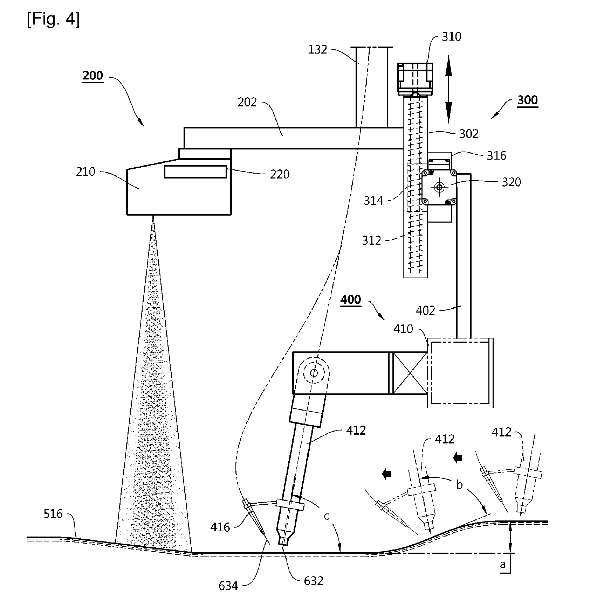

Meanwhile, as shown in Figs. 1 and 4, a fixing bracket (202) is installed at the third rotatable bracket (132), and the weld line tracing unit (200) is positioned in the front of the fixing bracket (202), and the torch transfer unit (300) is positioned in the rear of the fixing bracket (202),

Therefore, the torch unit (400) can pose in any orientation by being driven by the first, second and third rotating actuators (110, 120, 130), thus can actively take various postures, for example, for downward-looking welding, upward-looking welding, horizontal welding and vertical welding etc. according to disposed orientations of the base metal.

Furthermore, for various postures realized by the welding posture control unit (100) as described above, various welding postures can be taken by changing the orientation of the torch unit (400).

The frame (102) can be mounted to automatic welding machines that can run, and example of the automatic welding machine includes various types of turning roller, turntable, joint robot, running robot etc., and the TIG welding machine according to the present invention may be used by being installed at various types of automatic welding machines as described above.

On the other hand, the torch unit (400) can be reversed by the third rotating actuator (130), and by retracting the torch unit (400) in such a reversed state, a second weld bead can be formed over a weld bead firstly welded.

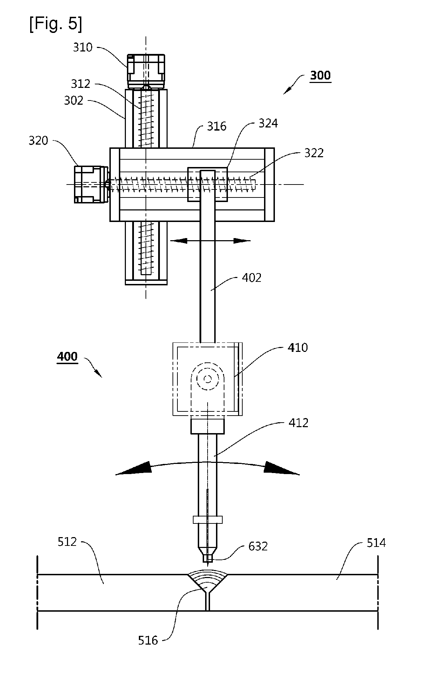

The torch transfer unit (300) will be described in a little greater detail with reference to Figs. 4 and 5.

Figs. 4 and 5 of the attached drawings are views for explaining the torch transfer unit (300) in the TIG welding machine according to an example of the present invention.

As shown in Figs. 4 and 5, the torch transfer unit (300) is installed on one side of the welding posture control unit (100), and more particularly, is installed at the third rotatable bracket (132).

In the torch transfer unit (300), a first block (302) is installed at the third rotatable bracket (132), and a first screw (312) is installed inside the first block (302), and a first feed actuator (310) for rotating the first screw (312) is installed on one side of the first block (302).

Furthermore, a first nut block (314) is screwed with the first screw (312), and the first nut block (314) can be linearly moved inside the first block (302).

A second block (316) is installed at the first nut block (314), and a second screw (322) is installed inside the second block (316), and a second feed actuator (320) for rotating the second screw (322) is installed on one side of the second block (316).

Furthermore, an axis of the first screw (312) and an axis of the second screw (322) may be oriented perpendicular to each other.

Furthermore, a second nut block (324) is installed on the second screw (322), and the second nut block (324) can be linearly moved inside the second block (316).

The torch unit (400) is installed on one side of the second block (316), more particularly, as shown in Fig. 5, a holder arm (402) is installed at the second nut block (324) and the torch unit (400) is installed at the holder arm (402).

Namely, information regarding the weld line which has been traced by the weld line tracing unit (200) can give a command to the first and second linear actuators (310, 320), whereby the first and second linear actuators (310, 320) can be moved, for example, in lateral and vertical directions.

More particularly, the first linear actuator (310) is driven based on the information regarding vertical displacement output from the weld line tracing unit (200) to adjust the height (a) of the torch unit (400), whereby a distance between the base metal and electrode (632) can be kept constant.

Furthermore, the second linear actuator (320) is laterally moved based on the information regarding lateral displacement output from the weld line tracing unit (200) to adjust the lateral movement of the torch unit (400), whereby welding can be performed by tracing the changed weld line even if the weld line is staggered or varied.

As described above, the TIG welding machine according to an example of the present invention can actively change the welding posture of the torch unit (400) by the welding posture control unit (100) depending on the disposed orientation of the base metal, whereby automation can be realized for more various types of welding operations.

Furthermore, the TIG welding machine according to an example of the present invention traces the weld line in an environment where the spatter is not generated, whereby pollution of optical instruments due to the spatter does not occur and hence the weld line can be precisely traced.

In particular, in the case where the base metal for welding is inclined or misaligned, by moving the torch unit (400) by means of the torch transfer unit (300) based on the information regarding the traced weld line, a spacing (s) between the first and second base metal (512, 514) and the electrode (632) can be always kept constant, whereby deterioration of the quality of welding can be prevented and thus the quality of welding can be improved.

Furthermore, in the case where the surface of the base metal for welding is excessively inclined, by actively coping with it through operations of the first, second and third rotating actuators (110, 120, 130), angles (b, c) defined between the torch (412) and the base metal for welding can be always kept constant, whereby the quality of welding can be improved.

Although the example of the present invention has been described with reference to the attached drawings, persons having an ordinary skill in the art to which the present invention belongs may understand that the present invention may be carried out in another specific forms without changing the technical concepts or essential features thereof.

Therefore, it should be understood that the example stated above are illustrative in every way, not limitative. The scope of the present invention is defined by the following claims, and all modified or varied forms derived from the meaning and scope of the claims and also equivalent concepts thereof should be interpreted to be included in the scope of the present invention.

### Industrial applicability

The TIG welding machine according to the present invention can be utilized for tracing the weld line in real time and then moving a TIG welding holder based on the information regarding the traced weld line to perform a precise TIG welding.

## Claims

1. A TIG welding machine comprising:
a torch unit (400) in which an electrode (632), a wire (634) and a weaving unit (410) are disposed;
a welding posture control unit (100) for controlling a welding posture by rotating the torch unit (400) in vertical and horizontal directions;
a weld line tracing unit (200) installed at the welding posture control unit (100) in the front of the torch unit (400) with respect to advancing direction of the torch unit (400) for tracing a weld line by detecting a placed state of a base metal for welding; and
a torch transfer unit (300) for moving the torch unit (400) based on information regarding the weld line which has been traced by the weld line tracing unit (200).

2. The TIG welding machine according to claim 1, wherein the welding posture control unit (100) comprises:
a first rotating actuator (110) installed at a frame (102) for rotating a first rotatable bracket (112);
a second rotating actuator (120) installed at the first rotatable bracket (112) for rotating a second rotatable bracket (122); and
a third rotating actuator (130) installed at the second rotatable bracket (122) for rotating a third rotatable bracket (132) at which the torch unit (400) is installed.

3. The TIG welding machine according to claim 1, wherein the weld line tracing unit (200) comprises:
a visual sensor unit (210) for scanning the weld line of the base metal for welding; and
a feed control unit (220) for tracing the weld line by calculating scanned information received from the visual sensor unit (210).

4. The TIG welding machine according to claim 1, wherein the torch transfer unit (300) comprises:
a first feed actuator (310) installed on one side of the welding posture control unit (100) for moving the torch unit (400) in a first direction based on the weld line which has been traced by the weld line tracing unit (200); and
a second feed actuator (320) installed on one side of the first feed actuator (310) for moving the torch unit (400) in a second direction perpendicular to the first direction based on the weld line which has been traced by the weld line tracing unit (200).
